# EUROPEAN PATENT SPECIFICATION

(11) **EP 1 281 258 B1**
(45) Date of publication and mention of the grant of the patent: **03.12.2008**
(21) Application number: 01940403.7
(22) Date of filing: 04.05.2001
(51) Int. Cl.: H04L 12/26, H04Q 7/34

(54) **TELECOMMUNICATIONS NETWORK**
TELEKOMMUNIKATIONSNETZ
RESEAU DE TELECOMMUNICATIONS

(30) Priority: 12.05.2000 GB 0011539
(43) Date of publication of application: 05.02.2003
(73) Proprietor: TELEFONAKTIEBOLAGET LM ERICSSON (publ), 164 83 Stockholm (SE)
(72) Inventor: MEE, Jerome, County Roscommon (IE); BRADY, Bernard, County Carlow (IE); MOYNIHAN, Marie, Bishopstown, Cork (IE)
(74) Representative: O'Connell, David Christopher
(86) International application number: PCT/EP2001/005052
(87) International publication number: WO 2001/086861

(56) References cited:
- WO-A-00/11884
- WO-A-95/04419
- US-A- 5 987 442

## Description

### Field of the invention

The invention relates to a network management system and method, and in particular, to a network management system and method in which performance measurements are controlled according to network load information.

### Background to the invention

A network such as a telecommunications network typically contains a number of performance management tools for monitoring the performance of the network. The user of the performance management tools has control over the selection, activation and deactivation of performance measurement reports in the network.

Default performance measurements are selected from the performance management tool in order to monitor the network performance at all times.

A network may also contain load prediction tools, which can predict the load in the network. This can be achieved using either realtime information from the network, such as the current load trends in the network, or historical performance data.

Load prediction tools may be used to indicate or predict a number of events occurring in the network, for example: predicting when the traffic in a particular cell of a cellular telephone network increases above a desirable level; predicting the load on a central processor within a network node, or the load on any specialised processor used for a central task (e.g. java virtual machine or routing of calls); predicting the load on certain hardware boards which can have a direct impact on the performance of a system (e.g. hardware boards which are likely to cause bottlenecks in the network); predicting the load from the point of view of available bit rate versus requested bit rate (which has a direct impact on packet data call performance); or, predicting the load from the point of view of available radio links versus requested radio links (which has a direct impact on voice call performance).

US-5,987,442 discloses a system which monitors the load in a network, thereby allowing the system to learn the behaviour of the network. This allows the system to predict the future behaviour of the network, so that potential congestion can be avoided.

WO 00/11884 and WO 95/04419 are further examples of known systems that monitor load in a network.

While the load prediction information is useful for indicating potential problems arising in the network, there is no means of using this information to automatically activate a group of performance measurements that would be better suited for monitoring the network further, thus preventing congestion from taking place.

The aim of the present invention is to provide a network management system and method in which a group of performance measurements are activated and/or deactivated in accordance with load information from a network.

### Summary of the invention

According to a first aspect of the present invention, there is provided a method of automatically activating and/or deactivating performance measurements in a network having a plurality of components, the method characterised by the steps of: receiving load information relating to a network component; determining which group of performance measurements is associated with the particular network component concerned; determining whether the group of performance measurements is already active; and, if not, activating the group of performance measurements; wherein the step of activating the group of performance measurements comprises the steps of: selecting the appropriate group of performance measurements, and determining a time schedule for activating the group of performance measurements; wherein the step of determining the time schedule is based on the predicted congestion time and a predefined time schedule for the particular group of performance measurements when activating a group of performances measurements; and based on using the predicted congestion period to determine when the group of performance measurements should be deactivated.

According to another aspect of the present invention, there is provided a performance management controller for use in activating and/or deactivating performance measurements in a network in which a plurality of performance measurements are carried out, the performance management controller characterised by: means for receiving load information relating to a network component; means for determining which group of performance measurements is associated with the particular network component concerned; means for determining whether the group of performance measurements is already active; and means for activating the group of performance measurements if the group of performance measurements is not already active, the means for activating the group of performance measurements comprising: means for selecting the appropriate group of performance measurements; means for determining a time schedule for activating the group of performance measurements; wherein the means for determining a time schedule uses information relating to the predicted congestion time and information from a predefined time schedule for activating a group of performance measurements, and uses the predicted congestion period to determine when the group of performance measurements should be deactivated.

According to yet another aspect of the present invention, there is provided a network management system as defined in the appended claims.

### Brief description of the drawings

For a better understanding of the present invention, and to show more clearly how it may be carried into effect, reference will now be made, by way of example, to the accompanying drawings, in which:-
Figure 1 shows a network management system according to the present invention;
Figure 2 shows the operation of the performance measurement controller of Figure 1.

### Detailed description of a preferred embodiment of the invention

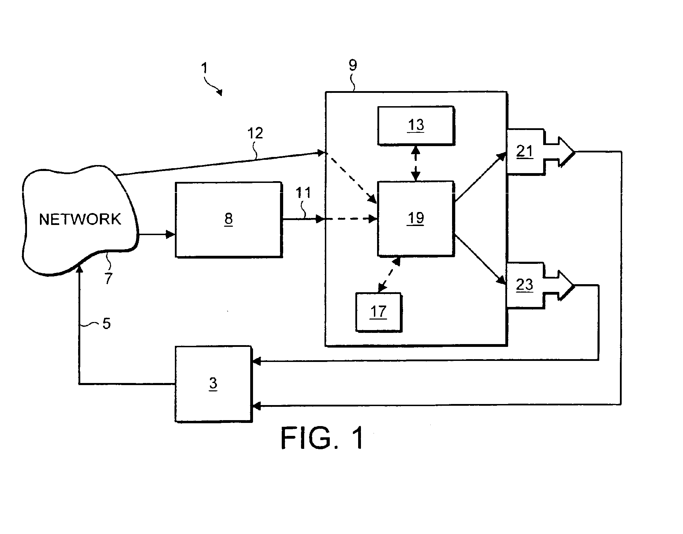

Referring to Figure 1, a network management system 1 comprises a performance management tool 3 for activating and deactivating performance measurements in a network 7. The network management system 1 also comprises a load prediction tool 8. The load prediction tool 8 provides information regarding the load which is predicted on one or more physical or logical components,(e.g. a link or cell, respectively), in the network 7.

A performance management controller 9 according to the present invention receives load prediction information 11 from the load prediction tool 8. The load prediction information 11 specifies logical or physical components of the network where a high load, or congestion, is predicted for sometime in the future. The load prediction information 11 may also include information which predicts the duration of the predicted congestion for the network component concerned.

The performance management controller 9 may also receive realtime load information 12 from the network 7. The realtime load information 12 relates to the current load on logical or physical components of the network.

The performance management controller 9 comprises a list of performance measurement groups 13, a list of predefined time schedules 17, and a control unit 19.

Performance measurements are grouped according to their relationship to a specific load condition (realtime and/or predicted), and stored in the list of performance measurement groups 13. Thus, the performance measurement group contains a list of performance measurements which should be made in the event that a particular network load is predicted, or as a realtime load occurs.

For example, if predicting the load on a particular hardware board, the following measurements could be grouped into a performance measurement group:
- the number of attempts to request access to the board;
- the number of failed attempts;
- the number of successful attempts;
- the current performance levels of boards directly before and after that "bottleneck" board in the network;
- usage levels of neighbouring, or similar, boards handling different geographical or logical areas.

Each of the predefined time schedules in the list of predefined time schedules 17 contains information relating to a specific performance measurement group, such as that described above. This information corresponds, for example, to the point in time at which the performance measurement group should be activated, and the length of time the performance measurement group should remain activated.

The performance measurement groups are predefined according to one or more of the logical or physical components in the network. Thus, each performance measurement group relates to performance measurements which should be made on one or more network components.

Preferably, the performance measurement groups report on the same logical and physical components as the load prediction tool 8. In this way, the load prediction tool 8 and the performance management controller 9 are able to understand one another, and report on the same measurable components.

The performance management controller 9 has activating means 21 for activating a group of performance measurements, for example by instructing the performance management tool 3. The performance management controller 9 also comprises deactivating means 23 for deactivating a group of performance measurements, again by instructing the performance management tool 3.

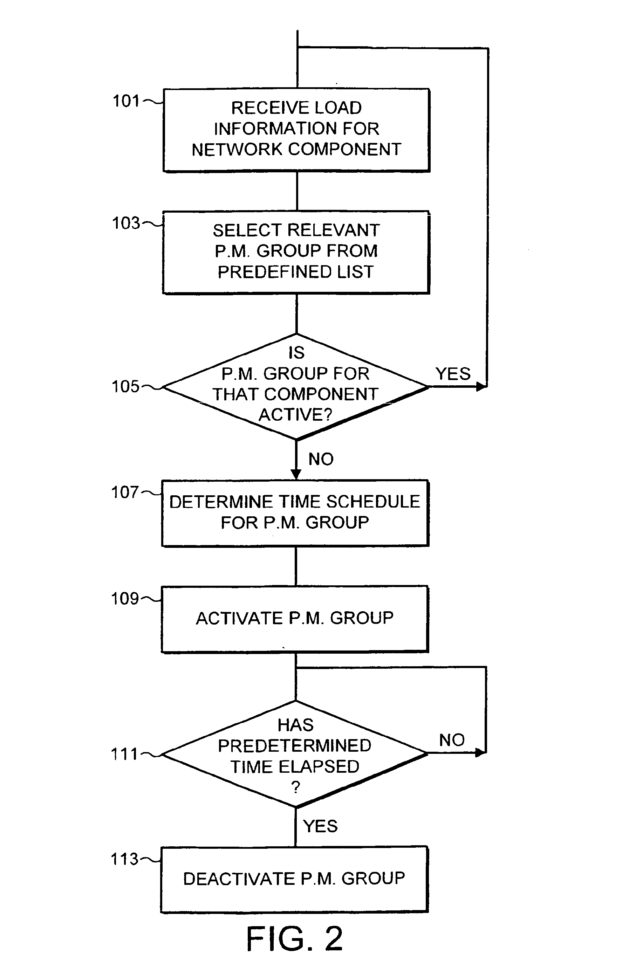

Reference will now be made to Figure 2, which describes the operation of the network management controller 9 of Figure 1.

The control unit 19 of the performance management controller 9 receives load information, for example load prediction information 11 from the load prediction tool 8, or realtime load information 12 directly from the network 7, step 101. The load prediction information 11 reports on network components for which congestion is predicted, whereas the realtime load information 12 provides realtime information of the load on network components. The load prediction information 11 may also include details concerning the predicted congestion period for that network component.

Having received the load information, the control unit 19 selects the relevant performance group from the list of performance measurement groups, step 103.

Next, the control unit 19 determines if the performance measurement group relating to that particular network component is already active, step 105. If the relevant group is active, then the control unit does nothing.

However, if the relevant performance measurement group is not active, then the control unit takes the necessary steps to activate the performance measurement group.

For example, if the predicted high load is for a certain cell in a cellular communications system, the controller may select measurements relating to cell traffic for all neighbouring cells to check if traffic should be re-routed through those cells prior to the predicted high load period.

Based on the predicted time for the high load and information from the list of predefined time schedules 17, the control unit 19 will determine the time schedule for the group of performance measurements, that is, select what time the new performance measurement group should be activated, and for what duration, step 107.

Using the information determined above, the control unit 19 activates the relevant performance measurement group accordingly, step 109.

Subsequently, after the appropriate time has elapsed, step 111, the control unit 19 deactivates the group of performance measurements, step 113.

In the preferred embodiment described above, the performance measurement group is deactivated in response to information contained in the time schedule. Alternatively, a performance measurement group may be deactivated in response to a change in the predicted load information (e.g. the predicted load falling below a certain level).

Furthermore, in addition to working on predicted information (thereby allowing the deactivation time to be determined in advance), it is also possible to use the realtime load information 12. In such an embodiment, it is possible to deactivate a performance measurement group in response to the realtime load information 12 falling below a certain level.

When activating or deactivating a performance measurement group using the realtime load information 12, hysteresis may also be provided to provide a delay between the load information crossing a particular level, and the corresponding performance measurement group being activated or deactivated. Such hysteresis prevents performance measurement groups from being repeatedly activated and deactivated when the load information is frequently crossing back and forth over a certain threshold.

The performance management controller 9 described above enables the monitoring of the network to be adaptively changed according to the load prediction information 11, or realtime load information 12, so that the most relevant performance data can be gathered in response to real time or predicted load information in the network.

The automatic activation and deactivation of the performance measurements in this manner means that wasteful measurements are not carried out.

Furthermore, the invention reduces the possibility of congestion occurring in the network, by automatically activating a group of performance measurements to monitor potential congestion in network components before any actual congestion occurs.

Furthermore, if a problem has occurred, the automatic activation of the relevant performance measurements means that the performance data may be used for creating historical data. This can be used to further predict problems, or establish trends on how problems arise in problematic parts of the network. In the event that a problem has actually occurred, the information can also be used to troubleshoot what caused the problem.

As mentioned above, the invention reduces the number of unnecessary measurements being collected, by automatically deactivating performance measurements for areas of the network where monitoring is not required.

In the description above, the activation of a group of performance measurements has been described as beginning all the measurements within that group. Similarly, the deactivation of a group of performance measurements has been described as ceasing all performance measurements within that group.

However, it is noted that the activation of a group of performance measurements can also result in certain performance measurements within the group being started and others being ceased. Likewise, the deactivation of a group of performance measurements can result in certain performance measurements within that group being ceased, and others being started.

Other modifications which are obvious to a person skilled in the art may be made without departing from the scope of the invention, as defined in the appended claims.

## Claims

1. A method of automatically activating and/or deactivating performance measurements in a network (7) having a plurality of components, the method **characterised by** the steps of:
receiving load information (11) relating to a network component;
determining which group (13) of performance measurements is associated with the particular network component concerned;
determining whether the group (13) of performance measurements is already active; and, if not,
activating the group (13) of performance measurements;
wherein the step of activating the group of performance measurements comprises the steps of:
selecting the appropriate group of performance measurements; and
determining a time schedule (17) for activating the group of performance measurements;
wherein the step of determining the time schedule is based on the predicted congestion time and a predefined time schedule for the particular group of performance measurements when activating a group of performance measurements, and based on using the predicted congestion period to determine when the group of performance measurements should be deactivated.

2. A method as claimed in claim 1, wherein the load information is indicative of possible congestion at the network component.

3. A method as claimed in claim 1 or 2, wherein the load information is based on realtime load information.

4. A method as claimed in claim 1 or 2, wherein the load information is based on predicted load information for a network component.

5. A method as claimed in claim 4, wherein the load information contains information corresponding to the predicted congestion period.

6. A method as claimed in any one of claims 1 to 5,
wherein the group of performance measurements is deactivated after a predetermined period of time according to the determined time schedule.

7. A method as claimed in any one of claims 1 to 5,
wherein the group of performance measurements is deactivated in response to the load information falling below a predetermined level.

8. A method as claimed in any one of the preceding claims, further comprising the step of defining a list of performance measurements.

9. A method as claimed in any one of the preceding claims, wherein the performance measurements are grouped according to one or more logical or physical components in the network.

10. A method as claimed in any one of the preceding claims, wherein each group of performance measurements has a predefined time schedule.

11. A method as claimed in any one of the preceding claims, wherein the performance measurement data is used to establish trends in potential trouble areas.

12. A performance management controller for use in activating and/or deactivating performance measurements in a network (7) in which a plurality of performance measurements are carried out, the performance management controller **characterised by**:
means for receiving load information (11) relating to a network component;
means for determining which group (13) of performance measurements is associated with the particular network component concerned;
means for determining whether the group (13) of performance measurements is already active; and
means for activating the group of performance measurements if the group of performance measurements is not already active, the means for activating the group of performance measurements comprising:
means for selecting the appropriate group of performance measurements;
means for determining a time schedule (17) for activating the group of performance measurements;
wherein the means for determining a time schedule uses information relating to the predicted congestion time and information from a predefined time schedule for activating a group of performance measurements, and uses the predicted congestion period to determine when the group of performance measurements should be deactivated.

13. A performance management controller as claimed in claim 12, wherein the means for receiving load information further comprises means for determining whether the load information indicates possible congestion at the network component.

14. A performance management controller as claimed in claim 12 or 13, wherein the load information is based on realtime load information.

15. A performance management controller as claimed in claim 12 or 13, wherein the load information is based on predicted load information for a network component.

16. A performance management controller as claimed in claim 15, wherein the load information contains information corresponding to the predicted congestion period.

17. A performance management controller as claimed in any one of claims 12 to 16, wherein the group of performance measurements is deactivated after a predetermined period of time according to the determined time schedule.

18. A performance management controller as claimed in any one of claims 12 to 16, having means for deactivating the group of performance measurements after the load level has fallen below a predetermined level.

19. A performance management controller as claimed in any one of claims 12 to 18, further comprising means for defining a list of performance measurements.

20. A performance management controller as claimed in any one of claims 12 to 19, wherein the performance measurements are grouped according to one or more logical or physical components in the network.

21. A performance management controller as claimed in any one of claims 12 to 20, wherein each group of performance measurements has a predefined time schedule.

22. A performance management controller as claimed in any one of claims 12 to 21, having means for using the performance measurement data to establish trends in potential trouble areas.

23. A performance management controller as claimed in any one of claims 12 to 22, further comprising means for enabling the controller to be programmed by a user.

24. A network management system comprising a plurality of physical or logical components, a performance measurement tool for carrying out performance measurements in the network, a load prediction tool for predicting the load in one or more of the physical or logical components, and a performance management controller as defined in any one of claims 12 to 23.

## Patentansprüche

1. Verfahren zum automatischen Aktivieren und/oder Deaktivieren von Performance-Messungen in einem Netzwerk (7) mit einer Vielzahl von Komponenten,
wobei das Verfahren **gekennzeichnet ist durch** die Schritte:
Empfangen einer Lastinformation (11) in Bezug auf eine Netzwerkkomponente;
Bestimmen, welche Gruppe (13) von Performance-Messungen mit der bestimmten betroffenen Netzwerkkomponente verbunden ist;
Bestimmen, ob die Gruppe (13) von Performance-Messungen bereits aktiv ist; und wenn nicht,
Aktivieren der Gruppe (13) von Performance-Messungen;
wobei der Schritt zum Aktivieren der Gruppe von Performance-Messungen die Schritte umfasst:
Auswählen der entsprechenden Gruppe von Performance-Messungen; und
Bestimmen eines Zeitplanes (17) zum Aktivieren der Gruppe von Performance-Messungen;
wobei der Schritt zum Bestimmen des Zeitplanes auf der vorhergesagten Überlastungszeit und einem vorbestimmten Zeitplan für die bestimmte Gruppe von Performance-Messungen beim Aktivieren einer Gruppe von Performance-Messungen basiert, und auf der Verwendung der vorhergesagten Überlastungsperiode basiert, um zu bestimmen, wann die Gruppe von Performance-Messungen deaktiviert werden soll.

2. Verfahren nach Anspruch 1, wobei die Lastinformation eine mögliche Überlastung an der Netzwerkkomponente anzeigt.

3. Verfahren nach Anspruch 1 oder 2, wobei die Lastinformation auf einer Realzeit-Lastinformation basiert.

4. Verfahren nach Anspruch 1 oder 2, wobei die Lastinformation auf einer vorhergesagten Lastinformation für eine Netzwerkkomponente basiert.

5. Verfahren nach Anspruch 4, wobei die Lastinformation eine Information enthält, die mit der vorhergesagten Überlastungsperiode zusammenhängt.

6. Verfahren nach irgendeinem der Ansprüche 1 bis 5, wobei die Gruppe von Performance-Messungen nach einer vorbestimmten Zeitperiode gemäß dem bestimmten Zeitplan deaktiviert wird.

7. Verfahren nach irgendeinem der Ansprüche 1 bis 5, wobei die Gruppe von Performance-Messungen als Antwort auf die, unter einen vorbestimmten Pegel fallenden Lastinformation deaktiviert wird.

8. Verfahren nach irgendeinem der vorhergehenden Ansprüche, ferner den Schritt umfassend zum Definieren einer Liste von Performance-Messungen.

9. Verfahren nach irgendeinem der vorhergehenden Ansprüche, wobei die Performance-Messungen gemäß einer oder mehrerer logischer oder physikalischer Komponenten in dem Netzwerk gruppiert werden.

10. Verfahren nach irgendeinem der vorhergehenden Ansprüche, wobei jede Gruppe von Performance-Messungen einen vorbestimmten Zeitplan aufweist.

11. Verfahren nach irgendeinem der vorhergehenden Ansprüche, wobei Performance-Messdaten verwendet werden, um Tendenzen in potentiell problembehafteten Bereichen zu ermitteln.

12. Performance-Verwaltungssteuereinheit zur Verwendung beim Aktivieren und/oder Deaktivieren von Performance-Messungen in einem Netzwerk (7), in dem eine Vielzahl von Performance-Messungen durchgeführt werden, wobei die Performance-Verwaltungssteuereinheit **gekennzeichnet ist durch**:
eine Einrichtung zum Empfangen von Lastinformationen (11) in Bezug auf eine Netzwerkkomponente;
eine Einrichtung zum Bestimmen, welche Gruppe (13) von Performance-Messungen mit der bestimmten betroffenen Netzwerkkomponente verbunden ist;
eine Einrichtung zum Bestimmen, ob die Gruppe (13) von Performance-Messungen bereits aktiv sind; und
eine Einrichtung zum Aktivieren der Gruppe von Performance-Messungen, wenn die Gruppe von Performance-Messungen nicht bereits aktiv ist,
wobei die Einrichtung zum Aktivieren der Gruppe von Performance-Messungen umfasst:
eine Einrichtung zum Auswählen der geeigneten Gruppe von Performance-Messungen;
eine Einrichtung zum Bestimmen eines Zeitplanes (17) zum Aktivieren der Gruppe von Performance-Messungen;
wobei die Einrichtung zum Bestimmen eines Zeitplanes Informationen verwendet, die sich auf die vorhergesagte Überlastungszeit und auf Informationen von einem vorbestimmten Zeitplan zum Aktivieren einer Gruppe von Performance-Messungen beziehen, und die vorhergesagte Überlastungsperiode verwendet, um zu bestimmen, wann die Gruppe von Performance-Messungen deaktiviert werden soll.

13. Performance-Verwaltungssteuereinheit nach Anspruch 12, wobei die Einrichtung zum Empfangen von Lastinformationen ferner eine Einrichtung zum Bestimmen umfasst, ob die Lastinformation eine mögliche Überlastung an der Netzwerkkomponente anzeigt.

14. Performance-Verwaltungssteuereinheit nach Anspruch 12 oder 13, wobei die Lastinformation auf einer Realzeit-Lastinformation basiert.

15. Performance-Verwaltungssteuereinheit nach Anspruch 12 oder 13, wobei die Lastinformation auf einer vorhergesagten Lastinformation für eine Netzwerkkomponente basiert.

16. Performance-Verwaltungssteuereinheit nach Anspruch 15, wobei die Lastinformation eine Information enthält, die mit der vorgesagten Überlastungsperiode zusammenhängt.

17. Performance-Verwaltungssteuereinheit nach irgendeinem der Ansprüche 12 bis 16, wobei die Gruppe von Performance-Messungen nach einer vorbestimmten Zeitperiode gemäß dem bestimmten Zeitplan deaktiviert wird.

18. Performance-Verwaltungssteuereinheit nach irgendeinem der Ansprüche 12 bis 16, mit einer Einrichtung zum Deaktivieren der Gruppe von Performance-Messungen nachdem der Lastpegel unter einen vorbestimmten Pegel gefallen ist.

19. Performance-Verwaltungssteuereinheit nach irgendeinem der Ansprüche 12 bis 18, ferner eine Einrichtung zum Definieren einer Liste von Performance-Messungen umfassend.

20. Performance-Verwaltungssteuereinheit nach irgendeinem der Ansprüche 12 bis 19, wobei die Performance-Messungen gemäß einer oder mehrerer logischer oder physikalischer Komponenten in dem Netzwerk gruppiert werden.

21. Performance-Verwaltungssteuereinheit nach irgendeinem der Ansprüche 12 bis 20, wobei jede Gruppe von Performance-Messungen einen vorbestimmten Zeitplan aufweist.

22. Performance-Verwaltungssteuereinheit nach irgendeinem der Ansprüche 12 bis 21, mit einer Einrichtung zur Verwendung der Performance-Messdaten, um Tendenzen in potentiell problembehafteten Bereichen zu ermitteln.

23. Performance-Verwaltungssteuereinheit nach irgendeinem der Ansprüche 12 bis 22, ferner eine Einrichtung umfassend, die es ermöglicht, dass die Steuereinheit durch einen Nutzer programmiert wird.

24. Netzwerk-Verwaltungssystem mit einer Vielzahl von physikalischen oder logischen Komponenten, einer Performance-Messeinrichtung zum Ausführen von Performance-Messungen in dem Netzwerk, eine Lastvorhersageeinrichtung zum Vorhersagen der Last in einem oder mehreren der physikalischen oder logischen Komponenten, und eine Performance-Verwaltungssteuereinheit wie in irgendeinem der Ansprüche 12 bis 23 definiert.

## Revendications

1. Procédé pour activer et/ou désactiver automatiquement des mesures de performance dans un réseau (7) ayant de multiples composants, le procédé étant **caractérisé par** les étapes qui consistent :
à recevoir une information de charge (11) concernant un composant du réseau ;
à déterminer quel groupe (13) de mesures de performance est associé au composant de réseau particulier concerné ;
à déterminer si le groupe (13) de mesures de performance est déjà actif ; et, s'il ne l'est pas,
à activer le groupe (13) de mesures de performance ;
dans lequel l'étape d'activation du groupe de mesures de performance comprend les étapes qui consistent :
à sélectionner le groupe approprié de mesures de performance ; et
à déterminer un horaire (17) pour activer le groupe de mesures de performance ;
dans lequel l'étape de détermination de l'horaire est basée sur le temps de congestion prédit et sur un horaire prédéfini pour le groupe particulier de mesures de performance lors d'une activation d'un groupe de mesures de performance, et est basée sur l'utilisation de la période de congestion prédite pour déterminer le moment où le groupe de mesures de performance devrait être désactivé.

2. Procédé selon la revendication 1, dans lequel l'information de charge est indicative d'une congestion possible au niveau du composant du réseau.

3. Procédé selon la revendication 1 ou 2, dans lequel l'information de charge est basée sur une information de charge en temps réel.

4. Procédé selon la revendication 1 ou 2, dans lequel l'information de charge est basée sur une information de charge prédite pour un composant du réseau.

5. Procédé selon la revendication 4, dans lequel l'information de charge contient une information correspondant à la période de congestion prédite.

6. Procédé selon l'une quelconque des revendications 1 à 5, dans lequel le groupe de mesures de performance est désactivé après une période de temps prédéterminée en fonction de l'horaire déterminé.

7. Procédé selon l'une quelconque des revendications 1 à 5, dans lequel le groupe de mesures de performance est désactivé en réponse à la chute de l'information de charge en dessous d'un niveau prédéterminé.

8. Procédé selon l'une quelconque des revendications précédentes, comprenant en outre l'étape de définition d'une liste de mesures de performance.

9. Procédé selon l'une quelconque des revendications précédentes, dans lequel les mesures de performance sont groupées en fonction d'un ou plusieurs composants logiques ou physiques dans le réseau.

10. Procédé selon l'une quelconque des revendications précédentes, dans lequel chaque groupe de mesures de performance a un horaire prédéfini.

11. Procédé selon l'une quelconque des revendications précédentes, dans lequel les données de mesure de performance sont utilisées pour établir des tendances dans des zones à problèmes potentiels.

12. Unité de commande pour la gestion de performances destinée à être utilisée pour activer et/ou désactiver des mesures de performance dans un réseau (7) dans lequel de multiples mesures de performance sont exécutées, l'unité de commande de gestion de performances étant **caractérisée par** :
un moyen destiné à recevoir une information de charge (11) concernant un composant du réseau ;
un moyen destiné à déterminer quel groupe (13) de mesures de performance est associé au composant de réseau particulier concerné ;
un moyen destiné à déterminer si le groupe (13) de mesures de performance est déjà actif ; et
un moyen destiné à activer le groupe de mesures de performance si le groupe de mesures de performance n'est pas déjà actif, le moyen destiné à activer le groupe de mesures de performance comportant :
un moyen destiné à sélectionner le groupe approprié de mesures de performance ;
un moyen destiné à déterminer un horaire (17) pour activer le groupe de mesures de performance ;
dans laquelle le moyen pour déterminer un horaire utilise une information concernant le temps de congestion prédit et une information provenant d'un horaire prédéfini pour activer un groupe de mesures de performance, et utilise la période de congestion prédite pour déterminer le moment où le groupe de mesures de performance devrait être désactivé.

13. Unité de commande pour la gestion de performances selon la revendication 12, dans laquelle le moyen destiné à recevoir une information de charge comporte en outre un moyen destiné à déterminer si l'information de charge indique une congestion possible au niveau du composant du réseau.

14. Unité de commande pour la gestion de performances selon la revendication 12 ou 13, dans laquelle l'information de charge est basée sur une information de charge en temps réel.

15. Unité de commande pour la gestion de performances selon la revendication 12 ou 13, dans laquelle l'information de charge est basée sur une information de charge prédite pour un composant du réseau.

16. Unité de commande pour la gestion de performances selon la revendication 15, dans laquelle l'information de charge contient une information correspondant à la période de congestion prédite.

17. Unité de commande pour la gestion de performances selon l'une quelconque des revendications 12 à 16, dans laquelle le groupe de mesures de performance est désactivé après une période de temps prédéterminée en fonction de l'horaire déterminé.

18. Unité de commande pour la gestion de performances selon l'une quelconque des revendications 12 à 16, ayant un moyen destiné à désactiver le groupe de mesures de performance après que le niveau de la charge a chuté en dessous d'un niveau prédéterminé.

19. Unité de commande pour la gestion de performances selon l'une quelconque des revendications 12 à 18, comportant en outre un moyen destiné à définir une liste de mesures de performance.

20. Unité de commande pour la gestion de performances selon l'une quelconque des revendications 12 à 19, dans laquelle les mesures de performance sont groupées conformément à un ou plusieurs composants logiques ou physiques dans le réseau.

21. Unité de commande pour la gestion de performances selon l'une quelconque des revendications 12 à 20, dans laquelle chaque groupe de mesures de performance a un horaire prédéfini.

22. Unité de commande pour la gestion de performances selon l'une quelconque des revendications 12 à 21, comportant un moyen destiné à utiliser des données de mesures de performance pour établir des tendances dans des zones à problèmes potentiels.

23. Unité de commande pour la gestion de performances selon l'une quelconque des revendications 12 à 22, comportant en outre un moyen destiné à autoriser l'unité de commande à être programmée par un utilisateur.

24. Système de gestion de réseau comportant de multiples composants physiques ou logiques, un outil de mesure de performance destiné à exécuter des mesures de performance dans le réseau, un outil de prédiction de charge destiné à prédire la charge dans un ou plusieurs des composants physiques ou logiques, et une unité de commande pour la gestion de performances telle que définie dans l'une quelconque des revendications 12 à 23.
